# FASCICULE DE BREVET EUROPEEN

(11) **EP 1 673 160 B1**
(45) Date de publication et mention de la délivrance du brevet: **24.01.2007**
(21) Numéro de dépôt: 04817222.5
(22) Date de dépôt: 13.10.2004
(51) Int. Cl.: B01F 11/04

(54) **APPAREIL DE MIXAGE D'UN ANALYSEUR CHIMIQUE OU BIOCHIMIQUE AVEC ENTRAINEMENT PENDULAIRE D'UNE PIPETTE**
ZU EINER CHEMISCHEN ODER BIOCHEMISCHEN ANALYSEVORRICHTUNG GEHÖRENDES MISCHGERÄT MIT EINER OSZILLIEREND ANGETRIEBENEN PIPETTE
MIXING APPLIANCE PERTAINING TO A CHEMICAL OR BIOCHEMICAL ANALYSER AND COMPRISING A PIPETTE DRIVEN IN AN OSCILLATING MANNER

(30) Priorité: 14.10.2003 FR 0311999
(43) Date de publication de la demande: 28.06.2006
(73) Titulaire: Maxmat SA, 34790 Grabels (FR)
(72) Inventeur: CHOJNACKI, André, F-34980 Saint-Gély du Fesc (FR); RANDRIANARIVO, Jeanet, F-34380 Saint Martin de Londres (FR)
(74) Mandataire: Jouvray, Marie-Andrée
(86) Numéro de dépôt international: PCT/FR2004/002593
(87) Numéro de publication internationale: WO 2005/037417

(56) Documents cités:
- US-A- 3 780 992
- US-A- 4 046 515
- PATENT ABSTRACTS OF JAPAN vol. 0101, no. 31 (C-346), 15 mai 1986 (1986-05-15) & JP 60 257826 A (CHIYUUOU KAKOUKI KK), 19 décembre 1985 (1985-12-19)

## Description

### Domaine technique de l'invention

L'invention concerne un appareil de mixage d'un analyseur chimique ou biochimique comportant au moins une pipette, ayant un corps, une extrémité libre et une tête fixée à un bloc support de tête, et des moyens d'entraînement destinés à provoquer l'oscillation de l'extrémité libre de la pipette, les moyens d'entraînement comportant un bloc actionneur, solidaire d'un bâti et associé à un bloc de guidage coopérant avec le corps de la pipette.

### État de la technique

Un analyseur chimique ou biochimique est composé de plusieurs modules comportant notamment un appareil de mixage pour mélanger un échantillon et un réactif. Dans un analyseur chimique ou biochimique connu à base de calorimétrie, une cuve de réaction, de forme tronconique, présente des parois en matière transparente d'un volume généralement inférieur à 500µl. L'analyse est alors réalisée par lecture optique, par transparence à travers la paroi inférieure de la cuve et la surface du ménisque du milieu réactionnel. Il est également possible d'utiliser une cuve de section rectangulaire et d'utiliser une lecture optique horizontale à travers les parois verticales de la cuve. Ceci permet d'éliminer les problèmes liés au ménisque et à la présence de bulles, mais les effets de sédimentation, dans un mixage peu efficace, restent cruciaux.

L'appareil de mixage d'un analyseur chimique ou biochimique doit satisfaire plusieurs contraintes de base pour obtenir un mélange optimal du milieu réactionnel :
- un système répétable : la conception de l'appareil de mixage doit tenir compte de la minimisation des effets parasites lors de mixages consécutifs.
- un système reproductible : un remplacement éventuel de la pipette doit pouvoir être effectué par l'utilisateur et préserver les caractéristiques de l'agitation. Il faut, de plus, veiller à la stabilité des caractéristiques de l'appareil de mixage dans le temps.
- une contamination minimale : le milieu réactionnel ne doit être en contact qu'avec un nombre réduit d'éléments et chacun de ces éléments doit présenter une surface minimale dénuée d'aspérités.
- un mixage efficace : la qualité du mixage influe directement sur la répétabilité des résultats. C'est pourquoi, il est indispensable de pouvoir agir sur les paramètres d'agitation.
- une absence de bulles : les bulles résultent d'un phénomène de cavitation provoqué par le contact entre l'élément de mixage, par exemple une pipette, et le milieu réactionnel. Il faut pouvoir agir sur des facteurs comme la vitesse; l'amplitude d'agitation, la viscosité du milieu réactionnel.
- pour les analyseurs utilisant des mesures optiques, notamment par transparence à travers le milieu réactionnel, une préservation de la symétrie de la forme du ménisque : un ménisque idéalement symétrique assurant une propagation optimale du rayon lumineux, le système de mixage doit préserver cette géométrie.

Il existe différents types d'appareil de mixage pouvant être associé à un analyseur chimique ou biochimique : appareil de mixage par électro-aimant, appareil de mixage rotatif, ou encore appareil de mixage piézoélectrique. Le document WO-A-01 /36892 décrit un appareil de mixage générant un mouvement de battement de la pipette. Les vibrations mécaniques sont engendrées par un électro-aimant dont l'alimentation provoque un mouvement d'oscillation alternatif de la pipette pour assurer le mixage du milieu réactionnel. La fréquence d'oscillation forcée de la pipette est ajustable par l'alimentation de l'électro-aimant. Ainsi, cet appareil, comme les appareils connus, utilise la force de rappel de la pipette, c'est-à-dire que la pipette est contrainte et que l'on utilise sa flexibilité pour obtenir des oscillations. La pipette est actionnée une première fois, par exemple par un électro-aimant, et c'est parce qu'elle est contrainte qu'elle continue à osciller. La pipette travaille donc en oscillation forcée, ce qui augmente la friction sur la pipette et la sensibilité autour de la zone de résonance des oscillations. Cela entraîne alors une usure de la pipette et de mauvaises conditions de mixage.

Un appareil d'un type similaire est exposé dans US-A-3780992.

### Objet de l'invention

L'invention a pour but un appareil ne présentant pas ces inconvénients et, en particulier, un appareil de mixage d'un analyseur chimique ou biochimique permettant d'obtenir un mixage efficace, sans création de bulles et avec une préservation de la forme du ménisque du mélange réactionnel.

Selon l'invention, ce but est atteint par un appareil selon les revendications annexées et, plus particulièrement, par le fait que le bloc support de tête est monté en rotation libre dans le bâti autour d'un axe perpendiculaire au plan dans lequel oscille la pipette.

Selon un développement de l'invention, le bloc de guidage comporte un bloc de liaison, solidaire de l'axe du bloc actionneur, et un bloc excentrique, solidaire du bloc de liaison, en contact avec le corps de la pipette, et monté en rotation libre autour de son axe.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue de face, en coupe, d'un mode particulier de réalisation d'un appareil de mixage selon l'invention.
La figure 2 est une vue partielle agrandie, selon la figure 1, de la partie supérieure de l'appareil de mixage.
Les figures 3 et 4 représentent, en vue de côté, l'appareil de mixage selon la figure 1, illustrant le plan d'oscillation de la pipette en fonctionnement.
Les figures 5 à 7 sont des vues partielles agrandies de la partie supérieure de l'appareil de mixage selon la figure 1, représenté sans le bloc moteur, et illustrant, en vue de côté, trois positions caractéristiques de la pipette, respectivement à gauche, au centre et à droite.
Les figures 8 à 11 représentent, en vue de côté, une vue schématique des quatre positions du bloc de guidage d'un appareil de mixage selon la figure 1.
Les figures 12 à 14 représentent, de manière schématique et exagérée, en vue de côté partielle agrandie, trois positions du bloc support de tête en fonctionnement d'un appareil de mixage selon les figures 3 et 4.

### Description de modes particuliers de réalisation.

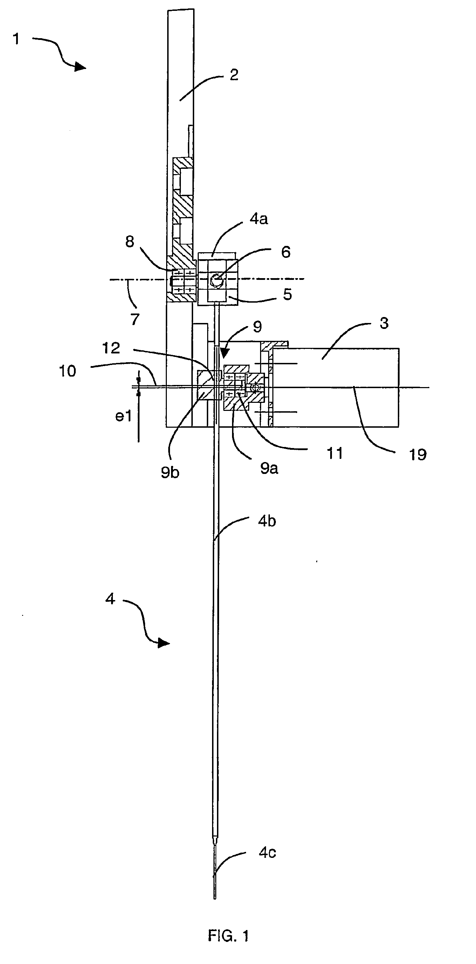

Sur la figure 1, l'appareil de mixage 1 comporte un bâti 2 sur lequel est fixé un bloc actionneur 3, de préférence constitué par un moteur à courant continu, comportant notamment des moyens de régulation de la vitesse, de l'accélération. et/ou de la durée de fonctionnement. L'appareil de mixage 1 comporte, classiquement une pipette 4 ayant une tête 4a, un corps 4b et une extrémité libre 4c. La tête 4a de la pipette 4 est fixée à un bloc support de tête 5 par tout moyen de serrage approprié, par exemple par une vis de bridage 6. Le bloc support de tête 5 est monté libre en rotation dans le bâti 2 autour d'un axe 7, par exemple grâce à un jeu de roulements 8 monté à l'intérieur du bâti 2. Les roulements 8 peuvent être, par exemple, des roulements à billes ou à rouleaux. Un bloc de guidage 9 pour le corps 4b de la pipette 4 est solidaire du bloc moteur 3. Le bloc de guidage 9 comporte un bloc de liaison 9a monté sur l'axe 19 du bloc moteur 3 par tout moyen de serrage approprié, par exemple par une vis de bridage, et un bloc excentrique 9b. Le bloc de liaison 9a et le bloc moteur 3 sont coaxiaux. Le bloc excentrique 9b est solidaire du bloc de liaison 9a et monté libre en rotation autour d'un axe 10, parallèle à l'axe 19, grâce à un jeu de roulements 11, monté à l'intérieur du bloc de liaison 9a. Dans le mode particulier de réalisation représenté sur les figures 1 à 11, le bloc excentrique 9b est traversé complètement par le corps 4b de la pipette 4. Le bloc excentrique 9b comporte donc un alésage 12, conçu pour permettre au corps 4b de la pipette 4 de coulisser librement avec jeu. De préférence, le bloc moteur 3, le bloc support de tête 5 et la pipette 4 sont situés du même côté du bâti 2, comme représenté sur la figure 1.

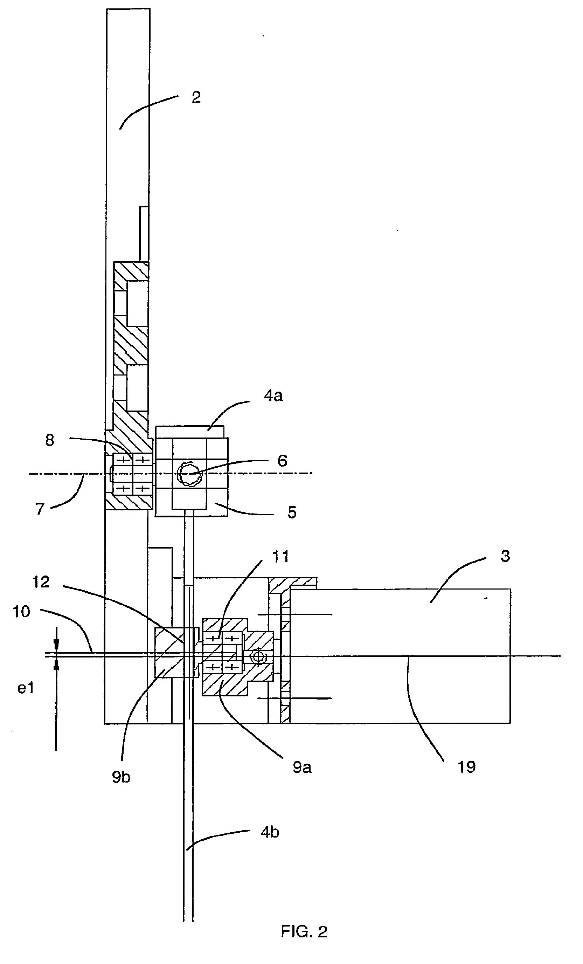

La figure 2, qui est une vue agrandie de la partie supérieure de l'appareil de mixage 1 selon la figure 1, permet de voir avec plus de précision le mode particulier de réalisation représenté sur la figure 1. En effet, l'axe 10 du bloc excentrique 9b est décalé par rapport à l'axe 19 du bloc moteur 3 d'une valeur e1 de l'ordre de 0,1 mm. Ainsi, le décalage entre les axes du bloc excentrique 9b et du bloc de liaison 9a est très faible. En effet, ce type d'analyseur chimique ou biochimique est destiné à analyser des quantités infimes de produit et l'appareil de mixage 1 est destiné à mélanger un milieu réactionnel 13 dont la quantité ne dépasse pas une ou deux gouttes.

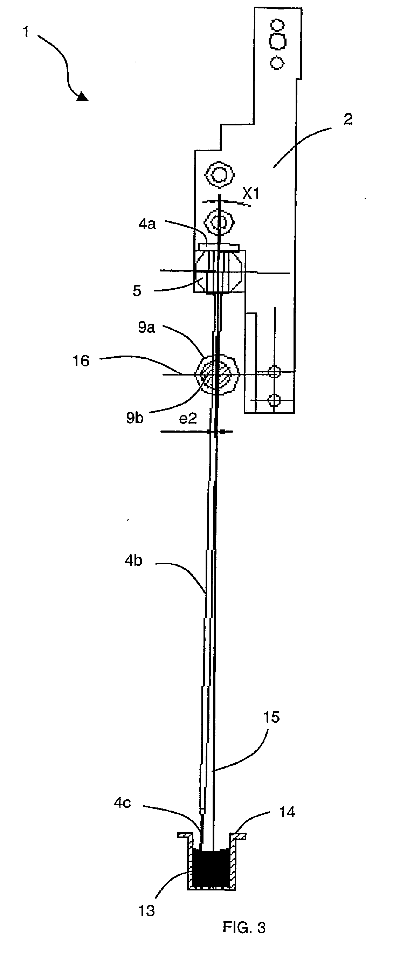

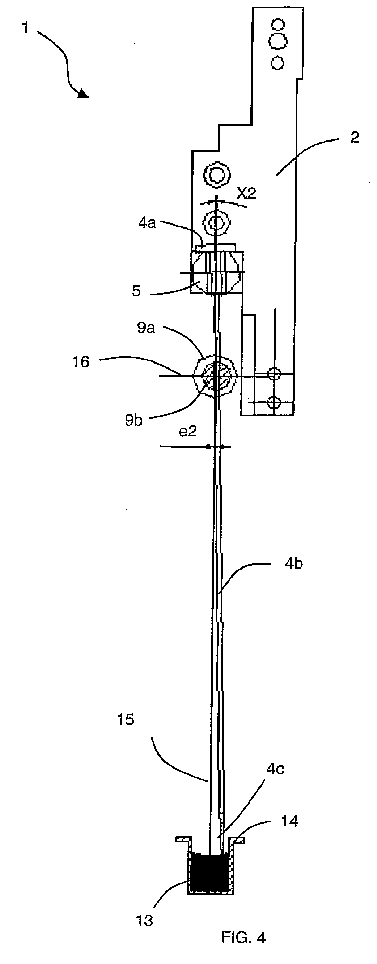

Comme le montrent les figures 3 et 4, le milieu réactionnel 13 est contenu dans un récipient 14 de faibles dimensions. Ces deux figures représentent le plan, perpendiculaire au plan de la figure 1, dans lequel oscille la pipette lors du fonctionnement de l'appareil de mixage 1. Un axe vertical 15, associé à un axe horizontal 16, représentent les axes de référence du bloc de liaison 9a. L'axe de rotation 19 du bloc de liaison 9a, qui est aussi celui du bloc moteur 3, est perpendiculaire au plan d'oscillation de la pipette 4 décrit précédemment. Les axes 15 et 16 et l'axe de rotation 19 du bloc de liaison 9a forment donc les axes de référence du bloc de liaison 9a.

Les figures 3 et 4 représentent des premières et secondes positions limites que peut prendre l'extrémité libre 4c de la pipette 4 pour ne pas entrer en contact avec le récipient 14, respectivement vers la gauche et vers la droite dans les figures 3 et 4. L'amplitude du mouvement ne dépasse pas une valeur e2, de l'ordre de 0,1 mm, au niveau de l'axe 16, de chaque côté d'une position centrale, pour obtenir des caractéristiques de mixage optimales. Sur les figures, cette position centrale est symbolisée par l'axe vertical 15. La faible valeur de l'excentricité due au bloc excentrique 9b permet donc de mélanger le milieu réactionnel 13 en conservant des caractéristiques de mixages optimales, notamment une contamination minimale, une absence de bulles et une bonne reproductibilité.

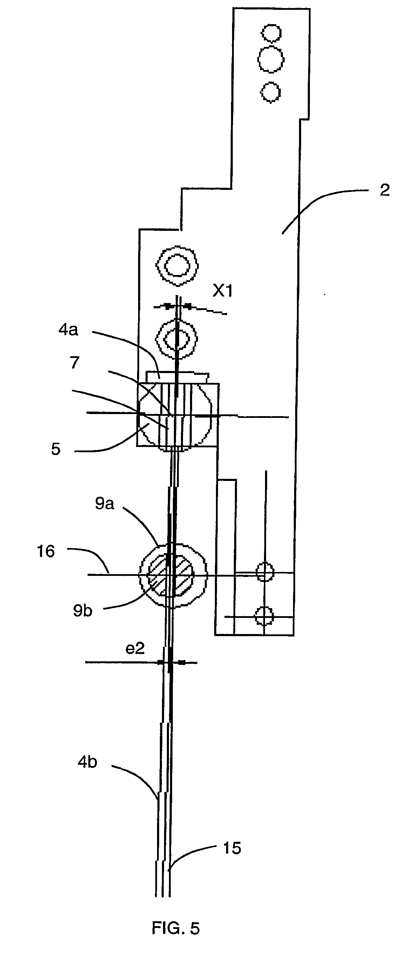

Les figures 5 à 7 représentent une vue de côté partielle agrandie de la partie supérieure de l'appareil de mixage 1 selon les figures 3 et 4. Pour une meilleure lisibilité et une meilleure compréhension, le bloc moteur 3, le récipient 14 et le milieu réactionnel 13 ont été retirés. Ainsi, la figure 5 représente la position limite à gauche de la pipette 4 dans son plan d'oscillation. Ce plan d'oscillation est parallèle au bâti 2 et perpendiculaire à l'axe 19 du bloc de liaison 9a et du bloc moteur 3 et donc, à l'axe 10 du bloc excentrique 9b. Comme illustré à la figure 5, dans sa position limite à gauche, le centre du bloc excentrique 9b est décalé vers la gauche par rapport à l'axe vertical 15 du bloc de liaison 9a, le long de l'axe horizontal 16. La valeur du décalage est, par exemple, de l'ordre de 0,1mm. La pipette 4, solidaire du bloc support de tête 5, qui a effectué une rotation vers la droite autour de son axe 7, perpendiculaire au plan d'oscillation de la pipette 4, forme un premier angle X1 avec l'axe vertical 15 de référence.

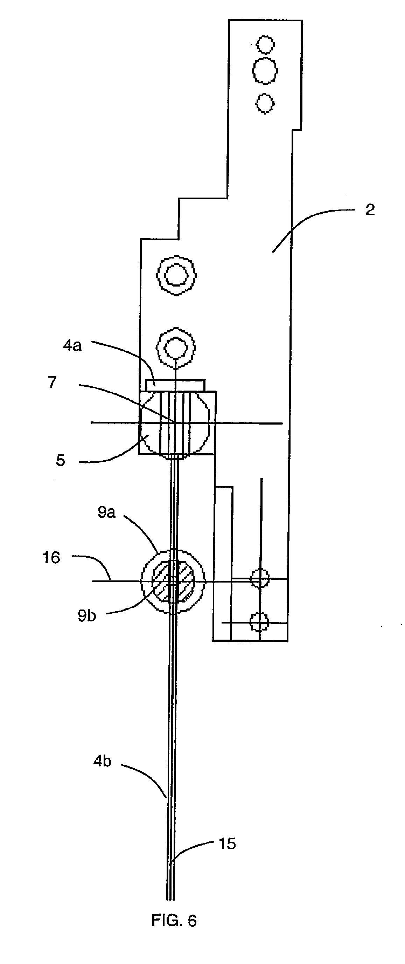

La figure 6 représente la position centrale de la pipette 4 dans son plan d'oscillation. Dans sa position centrale, le centre du bloc excentrique 9b n'est pas décalé par rapport à l'axe vertical 15 de référence. De même, le corps 4b de la pipette 4 est aligné avec l'axe vertical 15. Et le bloc support de tête 5 est dans une position centrale.

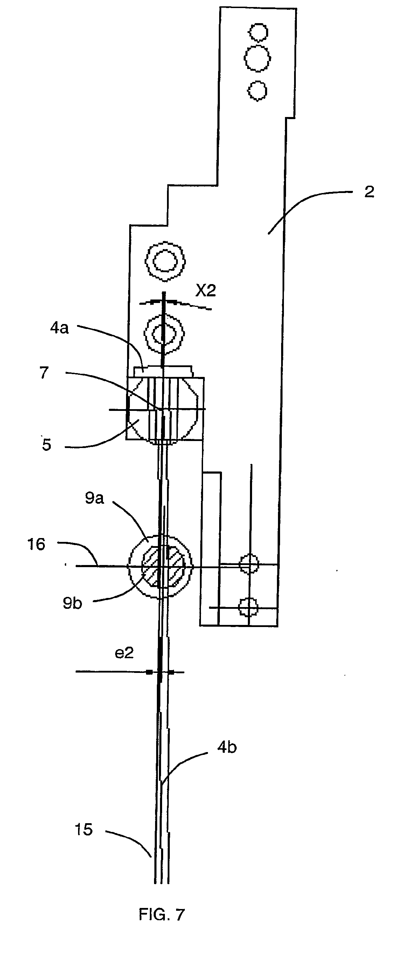

La figure 7 représente la position limite à droite de la pipette 4 dans son plan d'oscillation. Dans cette position limite, le centre du bloc excentrique 9b est décalé vers la droite par rapport à l'axe vertical 15, le long de l'axe horizontal 16. La valeur du décalage est sensiblement la même que dans la position limite à gauche. Le bloc support de tête 5 a effectué une rotation vers la gauche autour de son axe 7 et la pipette 4 forme un second angle X2, opposé au premier mais de valeur sensiblement identique, avec l'axe vertical 15 de référence.

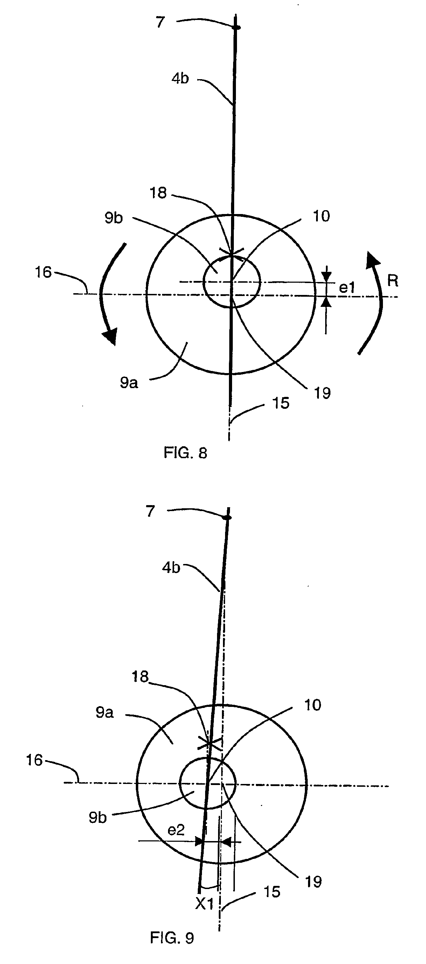

Le fonctionnement de l'appareil de mixage va être décrit plus en détail au regard des figures 8 à 11. Le bloc moteur 3 est, de préférence, équipé d'un système de régulation de vitesse, d'accélération et/ou de durée de fonctionnement. Initialement dans la position représentée à la figure 8, il entre en rotation dans le sens de la flèche R, à une vitesse donnée correspondant à l'intensité de mixage à transmettre au milieu réactionnel 13. Il entraîne alors le bloc de liaison 9a, solidaire de l'axe 19 du bloc moteur 3. Le bloc de liaison 9a, coaxial avec le bloc moteur 3, tourne donc sur lui-même autour de l'axe 19 du bloc moteur 3. Comme décrit ci-dessus, le bloc excentrique 9b, solidaire du bloc de liaison 9a, est monté en rotation libre autour de son axe 10, décalé d'une valeur e1 par rapport à l'axe 19, à l'intérieur du bloc de liaison 9a. Par bloc excentrique, on entend toute pièce dont la fonction est de transformer un mouvement circulaire continu en un mouvement rectiligne alternatif. Le bloc de liaison 9a, par l'intermédiaire de l'axe 19 du bloc moteur 3, est donc animé d'un mouvement circulaire uniforme. Il entraîne alors le bloc excentrique 9b en rotation autour de l'axe 19. Par contre, le bloc excentrique 9b, monté en rotation libre autour de son axe 10, et traversé par le corps 4b de la pipette 4, effectue une rotation d'angle X1 autour de son axe 10. Le bloc excentrique 9b provoque ainsi le pivotement de la pipette 4 autour de l'axe 7, le corps 4b de la pipette 4 coulissant dans l'alésage 12 du bloc excentrique 9b. L'appareil de mixage 1 se retrouve alors dans la position limite à gauche représentée à la figure 9, dans laquelle la pipette 4 fait un angle X1 avec l'axe vertical 15 (figure 5).

Sur les figures 8 à 11, la position d'un point 18 de la pipette 4 est symbolisée par une croix. La distance entre l'axe 7 et le point 18 reste toujours constante. Sur la figure 8, le point 18 est situé à l'intersection de la paroi du bloc excentrique 9b avec l'axe vertical 15.

Lorsque la pipette 4 a atteint sa position limite à gauche représentée à la figure 9, le point 18 n'est donc plus en contact avec le bloc excentrique 9b, ce qui illustre le phénomène de coulissement, et le corps 4b de la pipette 4 forme un angle X1 avec l'axe vertical 15. L'axe 10 est décalé d'une valeur e2 par rapport à l'axe vertical 15.

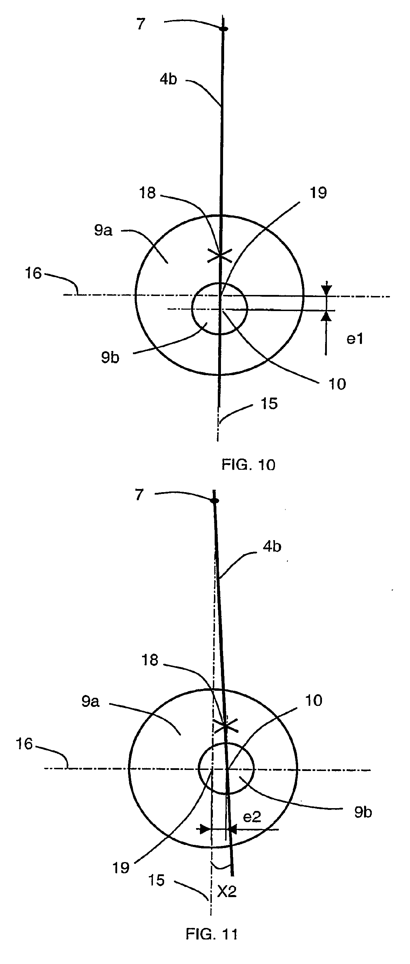

Ensuite le bloc de liaison 9a continue sa rotation autour de l'axe 19 et le bloc excentrique 9b, entraîné par le bloc de liaison 9a, effectue une rotation d'angle X1, sensiblement de même valeur, autour de son axe 10. Le bloc excentrique 9b provoque ainsi le pivotement de la pipette 4 autour de l'axe 7, le corps 4b de la pipette 4 coulissant dans l'alésage 12 du bloc excentrique 9b. L'appareil de mixage 1 se retrouve alors dans la position centrale représentée à la figure 10, dans laquelle le bloc excentrique 9b se retrouve en dessous de l'axe 16, décalé d'une valeur e1, mais est aligné avec l'axe vertical 15. Dans cette position centrale, différente de celle représentée à la figure 8, le point 18 n'est pas en contact avec le bloc excentrique 9b, ce qui illustre le phénomène de coulissement, et le corps 4b de la pipette 4 est aligné avec l'axe vertical 15.

Puis le bloc de liaison 9a continue sa rotation autour de son axe 19 et le bloc excentrique 9b, entraîné par le bloc de liaison 9a, effectue une rotation d'angle X2 autour de son axe 10. Le bloc excentrique 9b provoque ainsi le pivotement de la pipette 4 autour de l'axe 7, le corps 4b de la pipette 4 coulissant dans l'alésage 12 du bloc excentrique 9b. L'appareil de mixage 1 se retrouve alors dans la position limite à droite représentée à la figure 11, dans laquelle la pipette 4 fait un angle X2 avec l'axe vertical 15 (figure 7). Lorsque la pipette 4 a atteint sa position limite à droite représentée à la figure 11, le point 18 n'est pas en contact avec le bloc excentrique 9b, ce qui illustre le phénomène de coulissement, et le corps 4b de la pipette 4 forme un angle X2 avec l'axe vertical 15. L'axe 10 est décalé d'une valeur e2 par rapport à l'axe vertical 15.

Enfin, le bloc de liaison 9a continue son mouvement de rotation et le bloc excentrique 9b, entraîné par le bloc de liaison 9a, effectue une rotation d'angle X2, sensiblement de même valeur, pour revenir dans sa position initiale représentée à la figure 8.

L'enchaînement des positions décrites ci-dessus correspond à un tour complet du bloc de liaison 9a. Ce tour complet provoque ainsi un mouvement de va-et-vient de la pipette 4. La répétition de ce cycle engendre la répétition du mouvement de va-et-vient générant ainsi un mouvement pendulaire.

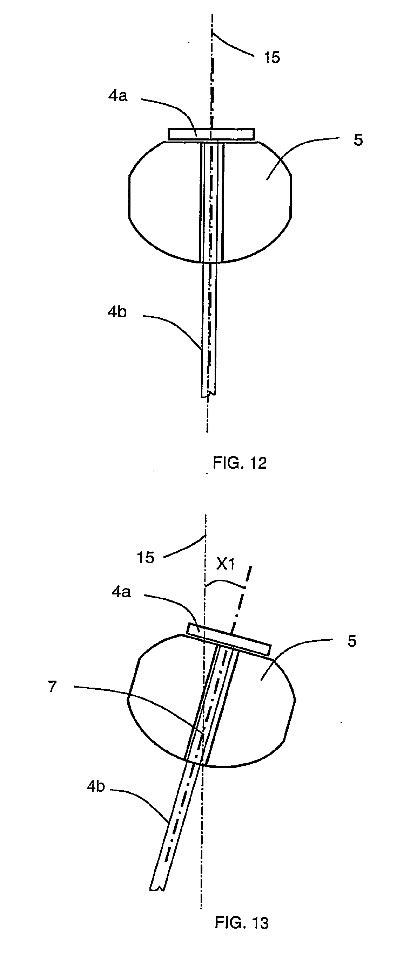

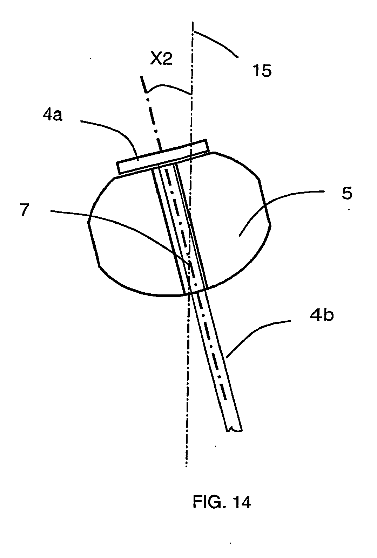

Pour une meilleure compréhension du fonctionnement, les figures 12 à 14 illustrent de manière exagérée les variations de l'angle X formé par le bloc support de tête 5 et la pipette 4 avec l'axe vertical 15. La figure 12 représente la position initiale centrale de la pipette 4, dans laquelle la pipette 4 est verticale (figure 6). La figure 13 représente la position limite à gauche de la pipette 4, dans laquelle la pipette 4 forme le premier angle X1 avec l'axe vertical 15 (figure 5). La figure 14 représente la position limite à droite de la pipette 4, dans laquelle la pipette 4 forme le deuxième angle X2, opposé au premier mais sensiblement de même valeur, avec l'axe vertical 15 (figure 7).

En pratique, il est déconseillé de régler l'excentrique en fonction de l'amplitude désirée du déplacement de l'extrémité libre 4c de la pipette 4. En effet, il est préférable de fixer le bloc excentrique 9b sur le bloc de liaison 9a une fois pour toute pour éviter ensuite toute manipulation mécanique qui entraînerait des problèmes, notamment des problèmes de répétabilité. C'est pourquoi, un système de régulation (non représenté) du bloc moteur 3 est souhaitable. Il est possible de réguler la vitesse, l'accélération et/ou la durée de fonctionnement du moteur. Ainsi, il est possible, en agissant sur l'accélération et la décélération du moteur, de supprimer ou de diminuer les éventuels phénomènes de résonance de la pipette 4 à certains moments de son mouvement pendulaire. Ceci permet, sans réglage mécanique de la pipette 4 ou du bloc excentrique 9b, de réaliser des mixages d'intensités différentes et de durées différentes, tout en conservant des caractéristiques optimales de mixage.

Dans un mode de réalisation préférentiel, la distance séparant l'axe 7 du bloc support de tête 5 et l'extrémité libre 4c de la pipette 4 est de l'ordre de 126,25mm et la distance entre l'axe 7 du bloc support de tête 5 et l'axe du bloc moteur 3 est de l'ordre de 23,75mm. L'axe vertical de la pipette 4 en position centrale est écartée du bâti 2 par une distance de l'ordre de 5mm.

Ainsi, le bloc excentrique 9b transforme le mouvement de rotation du bloc de liaison 9a en un mouvement de va-et-vient de la pipette 4, assimilable à un mouvement pendulaire. Ce mouvement pendulaire est assuré par le fait que la tête 4a de la pipette 4 est fixée à un bloc support de tête 5, qui lui-même n'est pas fixe par rapport au bâti 2, mais monté en rotation libre autour de son axe 7, par exemple, par l'intermédiaire de roulements 8 montés à l'intérieur du bâti 2. Ainsi, quand le corps 4b de la pipette 4 est entraîné par le bloc excentrique 9b et coulisse dans l'alésage 12, la tête 4a de la pipette 4, fixée au bloc support de tête 5, effectue en même temps une rotation autour de l'axe 7. C'est donc l'ensemble de ces deux mouvements combinés qui forme le mouvement pendulaire qui présente les avantages suivants, vis-à-vis des appareils de mixage connus :
- la faible friction sur le corps 4b de la pipette 4 permet des fréquences de mixage supérieures à 100Hz pour une meilleure efficacité de mixage.
- la configuration pendulaire n'utilise pas la raideur de la pipette 4 pour travailler en oscillation forcée et permet le fonctionnement dans une plage élargie de fréquences.
- les pièces de roulement 8 et 11 ont une durée de vie améliorée due à la faible friction.
- la répétabilité est accrue en raison de la faible friction.
- la reproductibilité est meilleure car le fonctionnement de l'appareil de mixage 1 dépend peu des caractéristiques de la pipette 4.
- le remplacement de la pipette 4 ne demande aucune qualification particulière.

Les performances d'un appareil de mixage à entraînement pendulaire sont améliorées d'un facteur supérieur à 3 par rapport à celles d'un appareil de mixage par électro-aimant.

L'invention n'est pas limitée aux modes de réalisation décrits ci-dessus. En particulier, le bloc moteur peut être remplacé par tout type de bloc actionneur.

Le corps 4b de la pipette 4 peut ne pas coulisser dans le bloc excentrique 9b, mais simplement rester en contact avec un bloc excentrique. Celui-ci peut avantageusement comporter un ensemble de roulement à billes. Un ressort calibré assure alors le contact de la pipette 4 avec les roulements. Cette disposition permet d'éliminer toute friction induite par le bloc excentrique.

## Revendications

1. Appareil de mixage (1) d'un analyseur chimique ou biochimique comportant au moins une pipette (4), ayant un corps (4b), une extrémité libre (4c) et une tête (4a) fixée à un bloc support de tête (5), et des moyens d'entraînement destinés à provoquer l'oscillation de l'extrémité libre (4c) de la pipette (4), les moyens d'entraînement comportant un bloc actionneur (3), solidaire d'un bâti (2) et associé à un bloc de guidage (9) coopérant avec le corps (4b) de la pipette (4), appareil **caractérisé en ce que** le bloc support de tête (5) est monté en rotation libre dans le bâti (2) autour d'un axe (7) perpendiculaire au plan dans lequel oscille la pipette (4).

2. Appareil selon la revendication 1, **caractérisé en ce que** le bloc de guidage (9) comporte un bloc de liaison (9a), solidaire de l'axe (19) du bloc actionneur (3), et un bloc excentrique (9b), solidaire du bloc de liaison (9a), en contact avec le corps (4b) de la pipette (4), et monté en rotation libre autour de son axe (10).

3. Appareil selon la revendication 2, **caractérisé en ce que** le bloc excentrique (9b) est traversé par le corps (4b) de la pipette (4).

4. Appareil selon l'une des revendications 2 et 3, **caractérisé en ce que** l'axe (10) du bloc excentrique (9b) présente un décalage de l'ordre de 0,1mm par rapport à l'axe (19) du bloc actionneur (3).

5. Appareil selon l'une quelconque des revendications 1 à 4, **caractérisé en ce que** le bloc actionneur (3) est un moteur à courant continu.

6. Appareil selon la revendication 5, **caractérisé en ce qu'**il comporte des moyens de régulation de la vitesse, de l'accélération ou de la durée de fonctionnement du moteur.

## Claims

1. Mixing appliance (1) pertaining to a chemical or biochemical analyser comprising at least one pipette (4) having a body (4b), a free end (4c) and a head (4a) fixed to a head supporting block (5), and driving means designed to cause oscillation of the free end (4c) of the pipette (4), the driving means comprising an actuating unit (3) securedly fixed to a frame (2) and associated with a guiding block (9) operating in conjunction with the body (4b) of the pipette (4), appliance **characterized in that** the head supporting block (5) is mounted in such a way as to rotate freely in the frame (2) around an axis (7) perpendicular to the plane in which the pipette (4) oscillates.

2. Appliance according to claim 1, **characterized in that** the guiding block (9) comprises a connecting block (9a), securedly fixed to the axis (19) of the actuating unit (3), and an eccentric block (9b), securedly fixed to the connecting block (9a), in contact with the body (4b) of the pipette (4), and mounted such as to rotate freely around its axis (10).

3. Appliance according to claim 2, **characterized in that** the body (4b) of the pipette (4) passes through the eccentric block (9b).

4. Appliance according to one of the claims 2 and 3, **characterized in that** the axis (10) of the eccentric block (9b) presents an offset of about 0.1mm with respect to the axis (19) of the actuating unit (3).

5. Appliance according to any one of the claims 1 to 4, **characterized in that** the actuating unit (3) is a DC motor.

6. Appliance according to claim 5, **characterized in that** it comprises means for regulating the speed, acceleration or operating time of the motor.

## Patentansprüche

1. Mischvorrichtung (1) eines Analysiergeräts für chemische oder biochemische Analysen, die mindestens eine Pipette (4) mit einem Körper (4b), einem freien Ende (4c) und einem Kopf (4a), der an einer Kopfhalterungseinheit (5) befestigt ist, sowie Antriebsmittel umfasst, die ein Hin- und Herschwingen des freien Endes (4c) der Pipette (4) bewirken sollen, wobei die Antriebsmittel eine Betätigungsvorrichtung (3) umfassen, die fest an einem Rahmen (2) sitzt und mit einer Führungseinheit (9) verbunden ist, die mit dem Körper (4b) der Pipette (4) zusammenwirkt, Vorrichtung, die **dadurch gekennzeichnet, dass** die Kopfhalterungseinheit (5) frei drehend in dem Rahmen (2) montiert ist, und zwar um eine Achse (7), die quer zu der Ebene angeordnet ist, auf der die Pipette (4) schwingt.

2. Vorrichtung nach Anspruch 1, **dadurch gekennzeichnet, dass** die Führungseinheit (9) eine Verbindungseinheit (9a) umfasst, die fest verbunden ist mit der Achse (19) der Betätigungsvorrichtung (3), sowie einen exzentrischen Block (9b), der fest mit der Verbindungseinheit (9a) verbunden ist und in Kontakt mit dem Körper (4b) der Pipette (4) steht und frei drehbar um seine Achse (10) montiert ist.

3. Vorrichtung nach Anspruch 2, **dadurch gekennzeichnet, dass** der exzentrische Block (9b) von dem Körper (4b) der Pipette (4) durchquert ist.

4. Vorrichtung nach einem der Ansprüche 2 und 3, **dadurch gekennzeichnet, dass** die Achse (10) des exzentrischen Blocks (9b) eine Abweichung von etwa 0,1 mm bezüglich der Achse (19) der Betätigungsvorrichtung (3) aufweist.

5. Vorrichtung nach einem der Ansprüche 1 bis 4, **dadurch gekennzeichnet, dass** die Betätigungsvorrichtung (3) ein Gleichstrommotor ist.

6. Vorrichtung nach Anspruch 5, **dadurch gekennzeichnet, dass** sie Mittel zur Regulierung der Geschwindigkeit, der Beschleunigung oder der Betriebsdauer des Motors umfasst.
